# FASCICULE DE BREVET EUROPEEN

(11) **EP 2 476 592 B1**
(45) Date de publication et mention de la délivrance du brevet: **08.04.2020**
(21) Numéro de dépôt: 11150893.3
(22) Date de dépôt: 13.01.2011
(51) Int. Cl.: B60R 25/02

(54) **Antivol de direction pour véhicule automobile**
Diebstahlsicherung für Lenksäule eines Kraftfahrzeugs
Steering-wheel antitheft device for an automobile

(43) Date de publication de la demande: 18.07.2012
(73) Titulaire: U-Shin Deutschland Zugangssysteme GmbH, 85253 Erdweg (DE)
(72) Inventeur: Laval, Anthony, D 80469, MUNCHEN (DE); Kaliebe, Lukas, D 85764, OBERSCHLEISSHEIM (DE)
(74) Mandataire: Verriest, Philippe

(56) Documents cités:
- EP-A1- 0 846 603
- FR-A1- 2 799 709
- US-A- 5 454 238

## Description

L'invention concerne les antivols de colonne de direction de type motorisés électriquement.

On connaît de multiples constructions d'antivols de colonne de direction telles que celle divulgué dans US 5 454 238. Ainsi, on a proposé des antivols de colonne de direction comprenant un moteur et une roue dentée laquelle entraîne un pêne de verrouillage par une came ou une pente associée à la roue dentée, dans lesquels la roue dentée est rotative autour d'un axe qui est parallèle à un axe de sortie du moteur électrique, ou encore dans lesquels la roue dentée est rotative autour d'un axe qui est perpendiculaire à l'axe de sortie du moteur électrique.

Le pêne circule alors en coulissement en rapprochement de la colonne de direction sous l'action d'une came ou d'une pente formée par la roue dentée jusqu'à venir engager une couronne périphérique de la colonne de direction.

Les antivols de colonne de direction à motorisation électrique connus présentent encore un encombrement trop important pour certaines dispositions à fortes contraintes spatiales, comme des disposition dans une partie basse de la colonne de direction, par exemple à proximité ou de manière intégrée à un module d'assistance motorisée à la rotation de la colonne de direction.

Le but de l'invention est de pallier aux inconvénients des antivols à motorisation électrique connus est notamment de proposer une configuration d'antivol de direction pouvant être logé dans un espace restreint en partie basse de la colonne de direction.

Ce but est atteint selon l'invention grâce à un antivol motorisé de colonne de direction de véhicule automobile selon la revendication 1, un module d'assistance à la rotation d'une colonne de direction selon la revendication 7 et un ensemble selon la revendication 8.

D'autres caractéristiques, buts et avantages de l'invention apparaîtront à la lecture de la description détaillée qui va suivre, faite en référence aux figures annexées sur lesquelles :
- la figure 1 est une vue d'ensemble d'un antivol selon un mode de réalisation préféré de l'invention ;

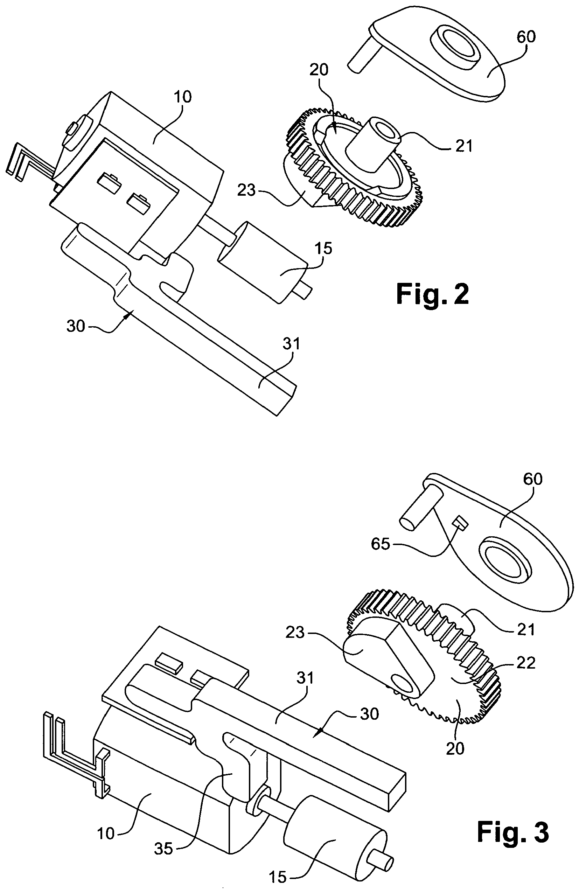

- la figure 2 est une vue éclatée en perspective de dessus de ce même antivol ;
- la figure 3 est une vue éclatée en perspective de dessous de ce même antivol ;

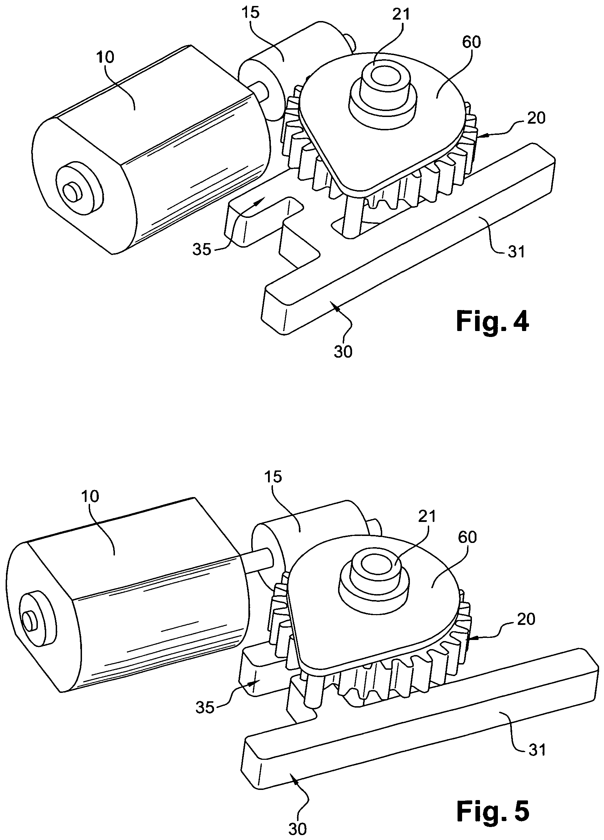

- la figure 4 est une vue partielle de ce même antivol en position de déverrouillage et bloquée de ce même antivol ;
- la figure 5 la position est une vue partielle de ce même antivol en position de verrouillage et non bloquée de ce même antivol ;

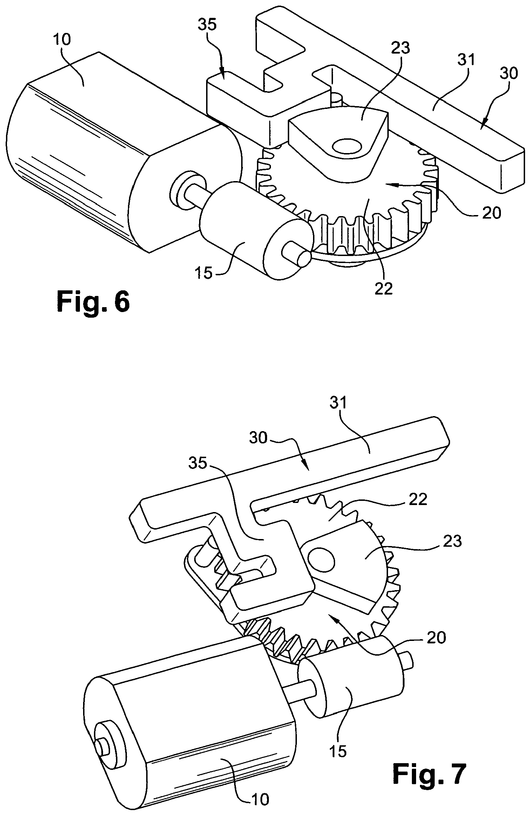

- la figure 6 est une vue partielle sans navette et de dessous de ce même antivol en position de déverrouillage et bloquée ;
- la figure 7 est une vue partielle sans navette et de dessous de ce même antivol en position de verrouillage et non bloquée
- la figure 8 est une vue partielle sans navette et de dessus de ce même antivol en position de déverrouillage.
- La figure 9 représente un ensemble constitué d'une colonne de direction et un module d'assistance au pivotement d'une colonne de direction lequel module inclut un antivol conforme à un mode de réalisation de l'invention.

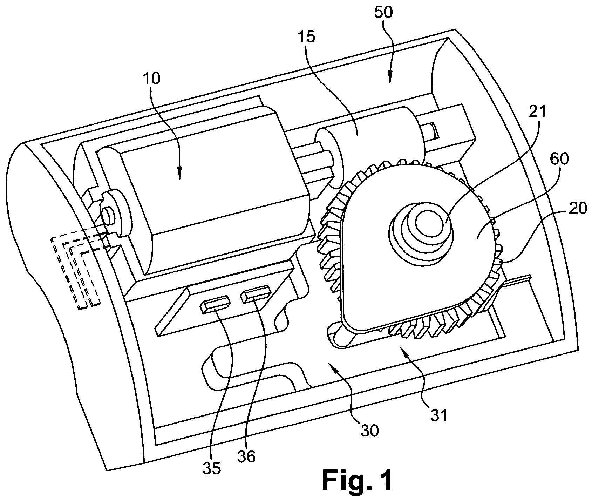

L'antivol représenté sur la figure 1 comprend un moteur électrique 10 muni d'un arbre de sortie formant une vis sans fin 15, une roue dentée 20 engrenée sur la vis sans fin 15, et un pêne 30 monté à coulissement, ces différents éléments étant disposés dans un boîtier 40.

La roue dentée 20 est montée à rotation autour d'un axe 21 lequel s'étend perpendiculairement à l'arbre de sortie du moteur 10 de sorte que l'arbre de sortie du moteur se trouve confondu dans le plan géométrique de la roue.

La roue 20 présent un première face 22 , tournée vers une colonne de direction non représentée, laquelle est munie d'une came 23 en portion de disque laquelle coopère en poussée avec le pêne. A cet effet, le pêne 30 présente, outre un barreau principal 31, un appendice latéral 35 apte à venir s'interposer sur le trajet de la came 23 lorsque celle-ci pivote avec la roue dentée 20 pour se rapprocher d'une couronne extérieure de la colonne de direction. Le pêne est avantageusement rappelé en position de verrouillage par un ressort.

Cet appendice latéral présente une forme en S dont la courbure supérieure forme une paroi d'appui pour la came 23 de la roue dentée et dont la courbure inférieure reçoit en son sein un élément de retenue en position déverrouillée comme on le décrira par la suite.

Ainsi, lorsque la roue dentée 20 est entraînée en rotation, le pêne 30 circule en coulissement dans un plan parallèle au plan principal de la roue dentée. La roue dentée 20 étant ici orientée de sorte qu'elle se trouve dans un plan parallèle à la colonne de direction, le pêne circule donc lui-même parallèlement à la direction principale de la colonne de direction.

Afin d'être verrouillée lorsque le pêne est en position finale, la colonne de direction présente un appendice latéral coopérant avec le pêne, ici une couronne dentée 80 dont les dents présentent entre elles des interstices recevant le pêne dans sa position étendue de verrouillage.

Dans un autre mode de réalisation, l'appendice latéral peut être un simple doigt d'orientation radiale par rapport à la direction principale de la colonne de direction, ou encore un plateau transversal muni d'une série d'orifices traversants et aptes à recevoir le pêne en de multiples positions angulaires de la colonne de direction.

La roue dentée 20 présente sur sa face orientée en éloignement de la colonne une piste en arc de cercle 24 constituée ici sous la forme d'une surépaisseur hors de la face de la roue 20.

La piste 24 s'étend sur trois quarts de l'étendue angulaire autour de l'axe de la roue 20 et présente à chacune de ses extrémités un chanfrein de glissement lequel rejoint le plan principal de la face 22.

La piste 22 coopère avec une navette 60 monté mobile à coulissement transversal au plan principal de la roue et plus spécifiquement ici montée à coulissement sur l'axe de rotation de la roue.

Cette navette présente une extension radiale 62 en direction du pêne 30 et vient, par un doigt 64 orienté transversalement au plan principal de la roue dentée 20, s'étendre à l'intérieur du pêne 30 et ce de manière sélective comme on l'expliquera ci-après.

La navette 60 vient en effet en appui contre la piste 22 par le biais d'un coulisseau 65 formé en relief sur la face de la navette tournée vers la roue et la navette est maintenue ainsi en appui contre la piste 22 transversalement à la roue dentée 20 par un ressort non représenté. La navette subit de ce fait un déplacement transversal à la roue dentée alors que celle-ci pivote sur elle-même lorsque le coulisseau 65 monte ou descend de la piste en surépaisseur 24. Au cours de ce mouvement, la navette 60 est maintenue à l'encontre d'un pivotement autour de l'axe de rotation de la roue dentée par coopération d'un doigt non représenté venu du boîtier de l'antivol et engagé dans un orifice traversant de la navette 60.

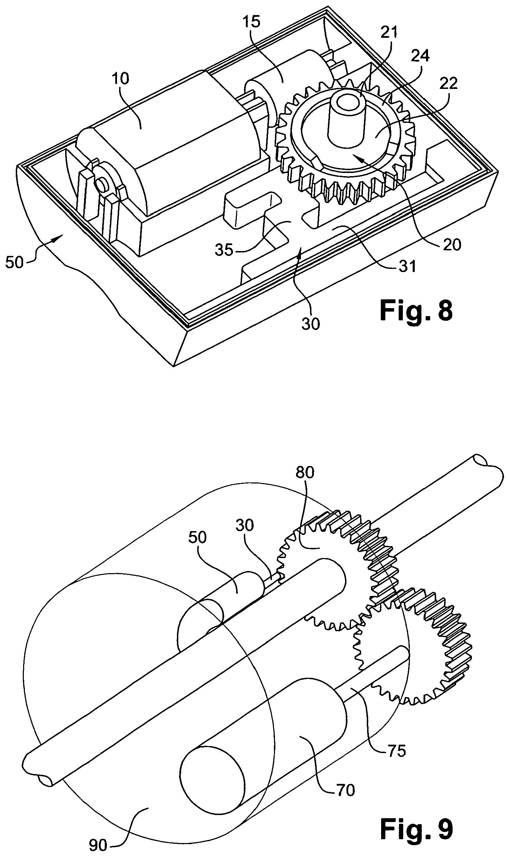

Tel que représenté sur la figure 8, la piste en surépaisseur 24 est disposée de telle manière que lorsque le pêne est en position de verrouillage de la colonne la navette se trouve écartée de la roue dentée c'est-à-dire que le coulisseau 65 est en appui sur la piste 24 et le doigt de surverrouillage de la navette n'engage alors pas le pêne. A l'opposé, la piste en surépaisseur est disposée de telle manière que la navette 60 se trouve rapprochée de la roue dentée c'est à dire que e coulisseau 65 se trouve hors de la piste 24 lorsque le pêne est en position de déverrouillage et que la navette vient alors sécuriser par le doigt de surverrouillage le pêne en position de déverrouillage. A cet effet la forme en S constituée par le pêne présente sa courbure proximale au corps principal du pêne en vis-à-vis du doigt de surverrouillage lorsque le pêne est en position de déverrouillage, autorisant ainsi la pénétration du doigt de surverrouillage dans la courbure proximale du S. Le doigt est alors positionné en obstacle sur le trajet de retour du pêne et plus spécifiquement de la courbure proximale du S, empêchant ainsi un retour inadvertant du pêne vers sa position de verrouillage.

En alternative la surépaisseur présentée par la piste 24 va est croissante au cours du parcours de la piste, de telle sorte qu'une première extrémité de l'arc de cercle décrit par la piste se trouve proche d'un plan principal de la roue et une autre extrémité de l'arc de cercle décrit par la piste 22 se trouve plus éloignée latéralement du plan principal de la roue 20.

Grâce à la présente orientation du pêne en déplacement parallèle à la colonne de direction, qu'il soit entraîné par une roue ainsi positionnée ou positionnée différemment par exemple perpendiculairement à la colonne de direction, on obtient un encombrement global de l'antivol de colonne de direction particulièrement faible et notamment selon la direction radiale à la colonne de direction.

Cet encombrement faible est particulièrement notable dans le cas où la roue dentée est orientée parallèlement à la colonne de direction, mais un gain d'encombrement est déjà facilement obtenu par une telle orientation du déplacement du pêne même lorsque la roue dentée est perpendiculaire à la colonne de direction.

En outre, bien qu'un pêne à coulissement parallèle à la colonne de direction est préféré en termes d'encombrement, un gain d'encombrement est déjà obtenu lorsque la partie du pêne qui engage la colonne de direction aborde la colonne de direction selon un direction sensiblement parallèle à la colonne, que le pêne soit coulissant ou rotatif auquel cas un mouvement de l'extrémité du pêne sensiblement tangentielle donc parallèle à la colonne ou un appendice latéral de celle-ci apporte un avantage important en termes d'encombrement de l'antivol.

Dans le présent exemple, le boîtier 50 de l'antivol est avantageusement aménagé en forme de vasque à liqueur, c'est-à-dire en extension selon la direction principale de la colonne de direction est selon une section transversale en forme de haricot, c'est-à-dire comprise entre deux limités transversales en arc de cercle de rayon respectivement inférieur et supérieur.

L'antivol de colonne de direction épouse alors un contour en cylindre de la colonne de direction pour n'occuper qu'un faible espace radial à la colonne. Un tel encombrement s'avère particulièrement avantageux dans le présent cas où l'antivol de colonne de direction est un élément constitutif d'un module d'assistance motorisée à la rotation de la colonne de direction. Le fait d'intégrer l'antivol dans un module d'assistance motorisée au pivotement de la colonne de direction apporte un avantage en termes de sécurité puisque l'antivol se trouve alors dans une partie particulièrement basse de la colonne, à distance particulièrement grande du tableau de bord où un voleur agit par prédilection et dans une partie particulièrement inaccessible du véhicule.

Dans le présent cas et tel que représenté sur la figure 9, le module d'assistance motorisée comprend un moteur d'assistance 70 lequel est orienté de telle sorte que son arbre de sortie 75 s'étend parallèlement à la colonne de direction. L'arbre de sortie 75 du moteur 70 présente une denture périphérique laquelle engrène une couronne dentée 80 entourant la colonne de direction afin d'entraîner celle-ci en rotation. La couronne dentée 80 est avantageusement la couronne dans laquelle s'engage le pêne 30 de sorte qu'une seule couronne dentée est utilisée pour les deux fonctions d'entraînement et de blocage, réduisant encore l'encombrement nécessaire à l'implémentation du module d'assistance décrit.

Avantageusement, l'antivol et le moteur d'assistance 70 sont disposés de manière radialement opposée à la colonne de direction, de sorte que le pêne 30 et l'arbre de sorte du moteur d'assistance n'interfèrent pas. Le module d'assistance motorisée comprend avantageusement une même unité électronique de pilotage de l'assistance au pivotement et de commande du blocage de la colonne, laquelle assure qu'aucune commande d'assistance n'est appliquée au moteur d'assistance lorsque l'antivol est en position verrouillée.

Par le fait que l'antivol de colonne de direction est une partie du module d'assistance motorisée à la rotation colonne de direction, l'unité de pilotage commune de l'assistance motorisée et du verrouillage de la colonne est avantageusement équipée d'une logique de commande mettant en œuvre un léger mouvement de rotation de la colonne de direction lorsqu'elle commande simultanément un effort d'entraînement en déverrouillage du pêne. Ainsi, par ce léger mouvement, une éventuelle retenue en frottement est supprimée entre le pêne et la colonne de direction, par exemple entre le pêne et une bordure latérale d'une dent de la couronne dentée 80 et le pêne circule en coulissement de manière fiabilisée à chaque mise en tension du véhicule.

L'unité de pilotage est avantageusement implémentée sous forme d'un circuit électronique place dans un boîtier commun 90 du moteur d'assistance 70 et de l'antivol. Le circuit électronique est avantageusement positionné en dehors du boîtier 50 de l'antivol. Outre la mise en oeuvre du pilotage de l'antivol par cette unité de pilotage prend notamment ici en compte le positionnement du pêne qui lui est indiqué par la réception de signaux de sortie de capteurs de positionnement du pêne disposés dans l'antivol. Ces deux capteurs, référencés 35 et 36, sont ici des capteurs magnétiques activés par un aimant disposé sur le pêne mais qui peuvent être en variante des capteurs mécaniques activés par un bossage du pêne. En alternative il peut s'agir de capteurs associés à la roue dentée, la navette de blocage ou tout autre organe de l'antivol. Les signaux délivrés par ces capteurs sont avantageusement directement lus par l'unité de pilotage.

## Revendications

1. Antivol motorisé de colonne de direction de véhicule automobile comprenant un pêne (30) muni d'un barreau principal (31), mobile entre une position de verrouillage de la colonne, dans laquelle le barreau principal (31) est apte à engager un appendice latéral (80) de la colonne de direction et une position de déverrouillage de la colonne, ainsi qu'un moteur électrique (10) d'entraînement du pêne entre la position de déverrouillage et la position de verrouillage, et une roue dentée (20), ledit moteur (10) présentant un axe de sortie et une vis (15) disposée sur l'arbre de sortie et ladite roue dentée (20) étant engrenée sur la vis (15), ***caractérisé en ce que*** le pêne (30) est monté de manière à aborder la colonne de direction selon une direction parallèle à la colonne de direction, **en ce que** la roue dentée (20) est orientée dans un plan parallèle à la colonne de direction et **en ce que** la roue dentée (20) comprend une face, tournée vers la colonne de direction, qui est munie d'une came (23) en portion de disque coopérant en poussée avec le pêne (30).

2. Antivol selon la revendication 1, dans lequel le moteur (10) est orienté de manière à ce que son arbre de sortie se trouve dans un plan parallèle à la colonne de direction.

3. Antivol selon l'une quelconque des revendications 1 ou 2, **caractérisé en ce que** le pêne (30) est monté à coulissement dans l'antivol selon une direction de coulissement parallèle à la colonne de direction.

4. Antivol selon l'une quelconque des revendications précédentes, **caractérisé en ce qu'**il comporte un élément (60) mobile entre une position de blocage du pêne en position déverrouillée et une position de déblocage du pêne.

5. Antivol selon la revendication précédente dans lequel l'élément (60) mobile de blocage du pêne (30) est en appui sur une portion de la roue dentée (20) laquelle repousse l'élément (60) mobile de blocage en éloignement du pêne (30) lorsque la roue dentée (20) est entraînée en rotation.

6. Antivol selon la revendication précédente, **caractérisé en ce que** la roue dentée présente une piste (24) en arc de cercle à éloignement progressif latéral à la roue dentée et l'élément mobile (60) de blocage est en appui contre la piste de manière à se rapprocher et s'éloigner lorsque la roue dentée est entraînée en rotation.

7. Module d'assistance à la rotation d'une colonne de direction comprenant un moteur d'assistance appliquant une force de pivotement à la colonne de direction, **caractérisé en ce qu'**il comprend un antivol selon l'une quelconque des revendications précédentes.

8. Ensemble constitué d'une colonne de direction de véhicule automobile et d'un antivol selon l'une quelconque des revendications 1 à 6

9. Ensemble combiné d'une colonne de direction de véhicule automobile et d'un module d'assistance à la rotation de la colonne de direction selon la revendication 7, dans lequel la colonne de direction comprend une couronne périphérique dans laquelle s'engage le pêne en position de verrouillage et laquelle couronne périphérique reçoit une force de pivotement de colonne de direction délivrée par le moteur d'assistance.

## Patentansprüche

1. Motorisierte Diebstahlsicherung für eine Lenksäule eines Kraftfahrzeugs, umfassend einen mit einer Hauptstange (31) ausgestatteten Riegel (30), der zwischen einer Verriegelungsstellung der Säule, in der die Hauptstange (31) in der Lage ist, einen seitlichen Ansatz (80) der Lenksäule in Eingriff zu nehmen, und einer Entriegelungsstellung der Säule beweglich ist, sowie einen Elektromotor (10) zum Antreiben des Riegels zwischen der Entriegelungsstellung und der Verriegelungsstellung, und ein Zahnrad (20), wobei der Motor (10) eine Ausgangsachse und eine Spindel (15) aufweist, die auf der Ausgangswelle angeordnet ist, und das Zahnrad (20) an der Spindel (15) eingreift, **dadurch gekennzeichnet, dass** der Riegel (30) so montiert ist, dass er in einer Richtung parallel zur Lenksäule an die Lenksäule angrenzt, dadurch, dass das Zahnrad (20) in einer Ebene parallel zur Lenksäule ausgerichtet ist, und dadurch, dass das Zahnrad (20) eine der Lenksäule zugewandte Seite umfasst, die mit einer Kurvenscheibe (23) ausgestattet ist, welche schiebend mit dem Riegel (30) zusammenwirkt.

2. Diebstahlsicherung nach Anspruch 1, wobei der Motor (10) so ausgerichtet ist, dass sich seine Ausgangswelle in einer Ebene befindet, die zur Lenksäule parallel ist.

3. Diebstahlsicherung nach einem der Ansprüche 1 oder 2, **dadurch gekennzeichnet, dass** der Riegel (30) in einer Verschieberichtung in der Diebstahlsicherung verschiebbar montiert ist, die zur Lenksäule parallel ist.

4. Diebstahlsicherung nach einem der vorstehenden Ansprüche, **dadurch gekennzeichnet, dass** sie ein Element (60) umfasst, das zwischen einer Sperrstellung des Riegels in entriegelter Stellung, und einer Freigabestellung des Riegels beweglich ist.

5. Diebstahlsicherung nach dem vorstehenden Anspruch, wobei sich das bewegliche Sperrelement (60) des Riegels (30) an einem Abschnitt des Zahnrads (20) in Anlage befindet, der das bewegliche Sperrelement (60) in Beabstandung zum Riegel (30) wegdrückt, wenn das Zahnrad (20) drehend angetrieben wird.

6. Diebstahlsicherung nach dem vorstehenden Anspruch, **dadurch gekennzeichnet, dass** das Zahnrad eine Bogenspur (24) mit zunehmender seitlicher Beabstandung zum Zahnrad aufweist, und sich das bewegliche Sperrelement (60) an der Spur in Anlage befindet, sodass es sich annähert und beabstandet, wenn das Zahnrad drehend angetrieben wird.

7. Modul zur Unterstützung der Drehung einer Lenksäule, das einen Unterstützungsmotor umfasst, der eine Schwenkkraft an die Lenksäule anlegt, **dadurch gekennzeichnet, dass** es eine Diebstahlsicherung nach einem der vorstehenden Ansprüche umfasst.

8. Baugruppe, die aus einer Kraftfahrzeug-Lenksäule und einer Diebstahlsicherung nach einem der Ansprüche 1 bis 6 besteht.

9. Kombinierte Baugruppe aus einer Kraftfahrzeug-Lenksäule und einem Modul zur Unterstützung der Drehung der Lenksäule nach Anspruch 7, wobei die Lenksäule einen Umfangskranz umfasst, in den der Riegel in Verriegelungsstellung eingreift, und der Umfangskranz eine Lenksäulen-Schwenkkraft aufnimmt, die vom Unterstützungsmotor geliefert wird.

## Claims

1. A motorized antitheft device of a motor vehicle steering column comprising a bolt (30) provided with a main bar (31), movable between a position for locking the column, wherein the main bar (31) is adapted to engage a lateral appendage (80) of the steering column and a position for unlocking the column, as well as an electric motor (10) for driving the bolt between the unlocking position and the locking position, and a toothed wheel (20), said motor (10) having an output axis and a screw (15) disposed on the output shaft and said toothed wheel (20) being meshed with the screw (15), **characterized in that** the bolt (30) is mounted so as to approach the steering column in a direction parallel to the steering column, **in that** the toothed wheel (20) is oriented in a plane parallel to the steering column and **in that** the toothed wheel (20) comprises a face, facing the steering column, which is provided with a cam in a portion of a disc (23) cooperating in thrust with the bolt (30).

2. The antitheft device according to claim 1, wherein the motor (10) is oriented so that its output shaft is in a plane parallel to the steering column.

3. The antitheft device according to any one of claims 1 or 2, **characterized in that** the bolt (30) is slidably mounted in the antitheft device in a sliding direction parallel to the steering column.

4. The antitheft device according to any one of the preceding claims, **characterized in that** it includes an element (60) movable between a position for blocking the bolt in the unlocked position and a position for unblocking the bolt.

5. The antitheft device according to the preceding claim wherein the movable element (60) for blocking the bolt (30) is bearing on a portion of the toothed wheel (20) which pushes the movable blocking element (60) away from the bolt (30) when the toothed wheel (20) is rotatably driven.

6. The antitheft device according to the preceding claim, **characterized in that** the toothed wheel has a track (24) in the shape of an arc of a circle with a progressive spacing lateral to the toothed wheel and the movable blocking element (60) is bearing against the track so as to move closer and farther away when the toothed wheel is rotatably driven.

7. A module for assisting the rotation of a steering column comprising an assistance motor applying a pivoting force to the steering column, **characterized in that** it comprises an antitheft device according to any one of the preceding claims.

8. An assembly consisting of a motor vehicle steering column and an antitheft device according to any one of claims 1 to 6

9. A combined assembly of a motor vehicle steering column and a module for assisting the rotation of the steering column according to claim 7, wherein the steering column comprises a peripheral ring in which the bolt is engaged in the locking position and which peripheral ring receives a steering column pivoting force delivered by the assistance motor.
